# EUROPÄISCHE PATENTSCHRIFT

(11) **EP 0 569 676 B1**
(45) Veröffentlichungstag und Bekanntmachung des Hinweises auf die Patenterteilung: **08.11.1995**
(21) Anmeldenummer: 93103729.5
(22) Anmeldetag: 09.03.1993
(51) Int. Cl.: F16F 13/00

(54) **Elastisches Gummilager**
Elastic rubber mount
Support élastique

(30) Priorität: 15.05.1992 DE 4216185
(43) Veröffentlichungstag der Anmeldung: 18.11.1993
(73) Patentinhaber: Boge A.G., D-53783 Eitorf (DE)
(72) Erfinder: Brenner, Heinrich, W-5483 Ahrweiler (DE); Meyer, Heinrich, W-5330 Königswinter 41 (DE)

(56) Entgegenhaltungen:
- EP-A- 0 042 761
- DE-C- 3 024 090
- FR-A- 2 587 429
- US-A- 4 962 915
- PATENT ABSTRACTS OF JAPAN vol. 8, no. 9 (M-268)(1446) 14. Januar 1984 & JP-A-58 170 934 (NISSAN JIDOSHA KK) 7. Oktober 1983
- PATENT ABSTRACTS OF JAPAN vol. 7, no. 141 (M-223)(1286) 21. Juni 1983 & JP-A-58 054 249 (TOYODA GOSEI KK)

## Beschreibung

Die Erfindung bezieht sich auf ein elastisches Gummilager, insbesondere für Kraftfahrzeuge, mit mindestens zwei Befestigungsteilen, die über eine Elastomerfeder miteinander verbunden sind, und mit einer vertikal wirkenden hydraulischen Dämpfungsvorrichtung und mindestens einer in horizontaler Richtung wirkenden hydraulischen Dämpfungsvorrichtung bestehend aus mindestens zwei horizontal gegenüberliegenden, in die Elastomerfeder eingeformten und mit Dämpfungsflüssigkeit gefüllten Kammern, die über mindestens einen als Dämpfungskanal wirkenden Kanal miteinander verbunden sind, wobei unterhalb der horizontal wirkenden Dämpfungsvorrichtung die in Richtung der vertikalen Koordinatenachse (z) ausgerichtete vertikal wirkende Dämpfungsvorrichtung vorgesehen ist, deren Kammern in Richtung der vertikalen Koordinatenachse hintereinanderliegend angeordnet und über einen Kanal hydraulisch miteinander verbunden sind.

Derartige elastische Gummilager sind bekannt (z.B. EP-A 0.042.761), bei denen mindestens zwei Befestigungsteile über eine Elastomerfeder miteinander verbunden sind. Dieses Lager zeigt eine vertikal wirkende hydraulische Dämpfungsvorrichtung sowie eine horizontal wirkende Dämpfungsvorrichtung, bestehend aus mit Dämpfungsflüssigkeit und über Dämpfungskanäle miteinander verbundenen Kammern. Die horizontal wirkende Dämpfungsvorrichtung besteht aus zwei gegenüberliegenden, in die Elastomerfeder eingeformten Kammern und einem die Kammern verbindenden Kanal. Die Kammern sind nach unten durch ein einstückig mit der Elastomerfeder ausgebildetem Trennteil begrenzt. Diese einstückig mit der Elastomerfeder ausgebildete Trennteil ist daher gleichzeitig Bestandteil der in Richtung der vertikalen Koordinatenachse ausgerichteten Dämpfungsvorrichtung.

Desweiteren sind elastische Gummilager bekannt (z.B. DE-PS 30 24 090), bei denen die Befestigungsteile über eine Elastomerfeder miteinander verbunden sind und zusätzlich eine hydraulische Dämpfungsvorrichtung aufweisen. Die Elastomerfeder ist dabei in eine äußere, ein- oder mehrteilige Schubfeder und in eine innere sich über einen Grundkörper am Befestigungsteil abstützende, ringförmige Gummifeder aufgeteilt. Durch diese Ausbildung wird von der inneren ringförmigen Gummifeder nur ein geringer Anteil der Lagerlast aufgenommen, wobei eine Dämpfung der niederfrequenten Schwingungen in Hochrichtung erreicht wird. Nachteilig ist bei einem derartigen Lager, daß in der weichen Schubrichtung keine Dämpfung erfolgen kann, so daß durch die weichen kleinen Federkonstanten der Elastomerfeder große ungedämpfte Bewegungen möglich sind, so daß ein Aufschaukeln bei Resonanz auftreten kann.

Darüber hinaus sind Gummilager bekannt (z.B. EP-PS 0.042.761), bei denen die Befestigungsteile über eine Elastomerfeder miteinander verbunden sind. Das Gummilager ist mit einer in horizontaler und mit einer in vertikaler Richtung wirkenden Dämpfungsvorrichtung versehen. Nachteilig ist dabei, daß die einfache Ausführungsform eine geringe Wirkungsweise erwarten läßt.

Aufgabe der Erfindung ist es, ein elastisches Gummilager so zu verbessern, daß die Übertragung von Schwingungen in vertikaler und in mindestens einer horizontalen Richtung wirkungsvoll gedämpft werden kann, wobei die horizontale Dämpfung entweder in Fahrzeuglängsrichtung, z.B. Fahrwerkslagerungen, und/oder in Fahrzeugquerrichtung, z.B. Motorlagerungen, erforderlich sein kann.

Zur Lösung dieser Aufgabe ist erfindungsgemäß vorgesehen, daß die Kammern der horizontal wirkenden Dämpfungsvorrichtung in die Elastomerfeder nach unten offen eingeformt sind und nach unten durch ein von der Elastomerfeder separates Trennteil begrenzt sind, unterhalb dieses die vertikal wirkende Dämpfungsvorrichtung angeordnet ist.

Bei dieser Ausbildung ist von Vorteil, daß das Lager bei Verwendung von zwei Kammern als Fahrwerkslager hohe Seitenführungskräfte in Richtung y, ferner die Aufnahme großer Vertikalkräfte und Dämpfung von vertikalen Schwingungen gewährleistet und dabei gleichzeitig in Fahrzeuglängsrichtung durch eine weiche Federkennlinie x und Dämpfung hoher Abrollkomfort erzielt wird. Bei Verwendung des Lagers als Motorlager, mit ebenfalls zwei Kammern, können in Richtung z hohe Traglasten aufgenommen und Schwingungen gedämpft werden, in Richtung x können große Bremskräfte abgefangen werden, und in Richtung y kann bei weicher Federkennlinie das Querschütteln des Motors wirkungsvoll gedämpft werden.

Ausgestaltungen der Erfindung ergeben sich aus den Ansprüchen 2 bis 17.

Bevorzugte Ausführungsbeispiele der Erfindung sind in den Zeichnungen schematisch dargestellt.

Es zeigt:
Figur 1 ein als Motorlager ausgebildetes elastisches Gummilager, teils geschnitten
Figur 2 eine Draufsicht des in Figur 1 dargestellten Gummilagers
Figur 3 eine Seitenansicht des in Figur 1 dargestellten Gummilagers teils geschnitten
Figur 4 ein Gummilager im Prinzip wie in Figur 1 bereits dargestellt, jedoch als Rundlager ausgebildet.
Figur 5 - 7 weitere Ausführungsformen eines Gummilagers mit vier Kammern.

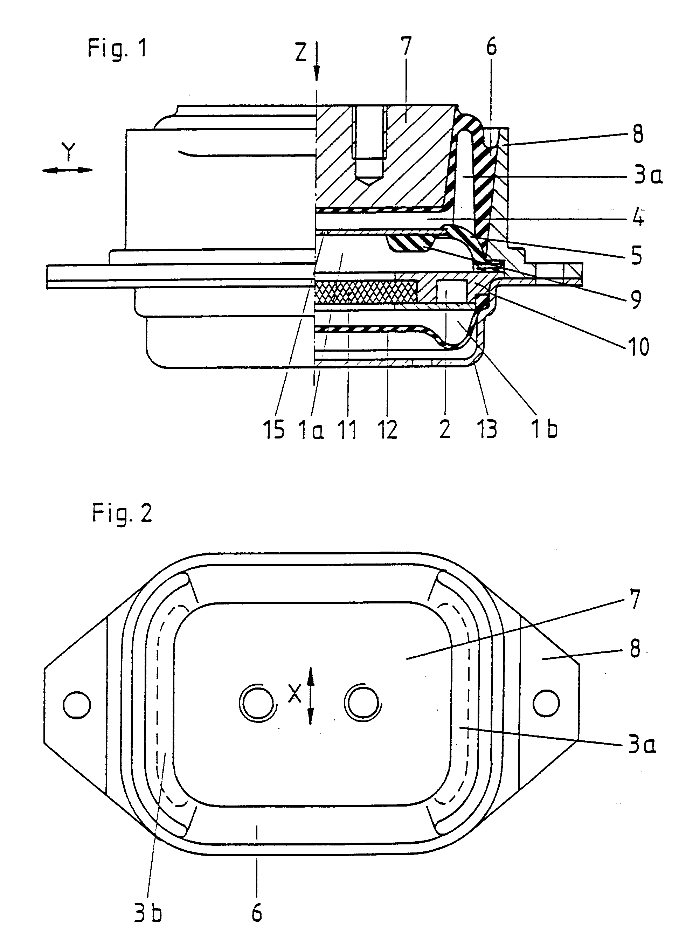

Das in Figur 1 dargestellte elastische Gummilager besteht im wesentlichen aus zwei Befestigungsteilen 7 und 8, die über eine Elastomerfeder 6 miteinander verbunden sind, wobei innerhalb des elastischen Gummilagers zwei unabhängig voneinander arbeitende Dämpfungsvorrichtungen angeordnet sind. Das elastische Gummilager weist in Richtung der Achse x eine verhältnismäßig straffe Schub-Druckkennlinie auf. Diese Achse x verläuft senkrecht zur Zeichenebene.

Die Elastomerfeder 6 ist mit zwei Kammern 3a und 3b versehen, welche über einen Kanal 4 hydraulisch miteinander in Verbindung stehen. Der Kanal 4 ist im Befestigungsteil 7 teilweise eingelassen und wird durch das Trennteil 5 geschlossen. Durch diese Dämpfvorrichtung wird in der Achse y eine hydraulische Dämpfung mittels der Kammern 3a und 3b und dem Kanal 4 erzielt.

Das Befestigungsteil 8 ist mit einer Trennwand 10 und einem Faltenbalg 12 versehen, so daß die Kammern 1a und 1b über einen in der Trennwand 10 verlaufenden Kanal 2 miteinander in hydraulischer Verbindung stehen. Durch diese Dämpfungsvorrichtung wird in der Achse z eine hydraulische Dämpfung erreicht. Gegenüber einem zu starken vertikalen Einfedern des Befestigungsteiles 7 ist das Trennteil 5 mit einem Anschlag 9 versehen, der mit der Trennwand 10 zusammen arbeitet.

Die Trennwand 10 ist zusätzlich mit einer Entkopplungsmembran 11 versehen.

Die Kammer 1b und der Faltenbalg 12 sind gegen die Atmosphäre durch eine Schutzkappe geschützt.

Im Trennteil 5 ist die im Durchmesser kleine Öffnung 15 für den Druckausgleich zwischen den Kammern 3a, 3b und der Kammer 1a vorgesehen.

Die Figur 2 zeigt in Draufsicht, daß die Befestigungsteile 7 und 8 in etwa rechteckig angeordnet sind, so daß die Schubfeder 6 im wesentlichen an der Längsseite des Gummilagers verläuft, während die Schubfeder 6 im Bereich der Stirnseiten mit den Kammern 3a und 3b mit einer entsprechenden hydraulischen Dämpfvorrichtung versehen ist.

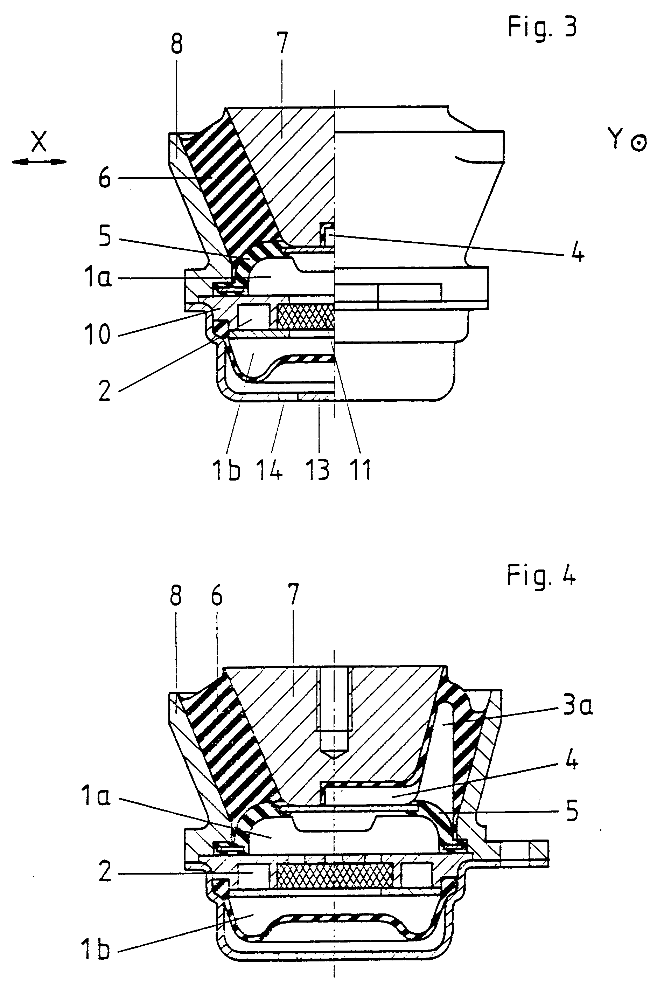

Aus der Figur 3 ist in der Seitenansicht zu entnehmen, daß das Trennteil 5 den Kanal 4 im Befestigungsteil 7 gegenüber der Kammer 1a abgrenzt. Die Kammer 1b dient als volumenausgleichender Ausgleichsraum, während zu einem einwandfreien Druckausgleich in der Schutzkappe 13 eine Entlüftungsbohrung 14 angeordnet ist.

Aus der Figur 4 ist ein elastisches Gummilager in Form eines Rundlagers dargestellt, wobei wiederum im wesentlichen die Befestigungsteile 7 und 8 zu entnehmen sind, wobei die Kammer 3a über den Kanal 4 mit der Kammer 3b (nicht dargestellt, da die linke Seite um 90 Grad versetzt gezeichnet ist) in Verbindung steht. Die Kammern 1a und 1b sind über den Kanal 2 hydraulisch miteinander in Verbindung. Die Elastomerfeder 6 verläuft kegelförmig um das Befestigungsteil 7 und ist mit den Kammern 3a und 3b versehen.

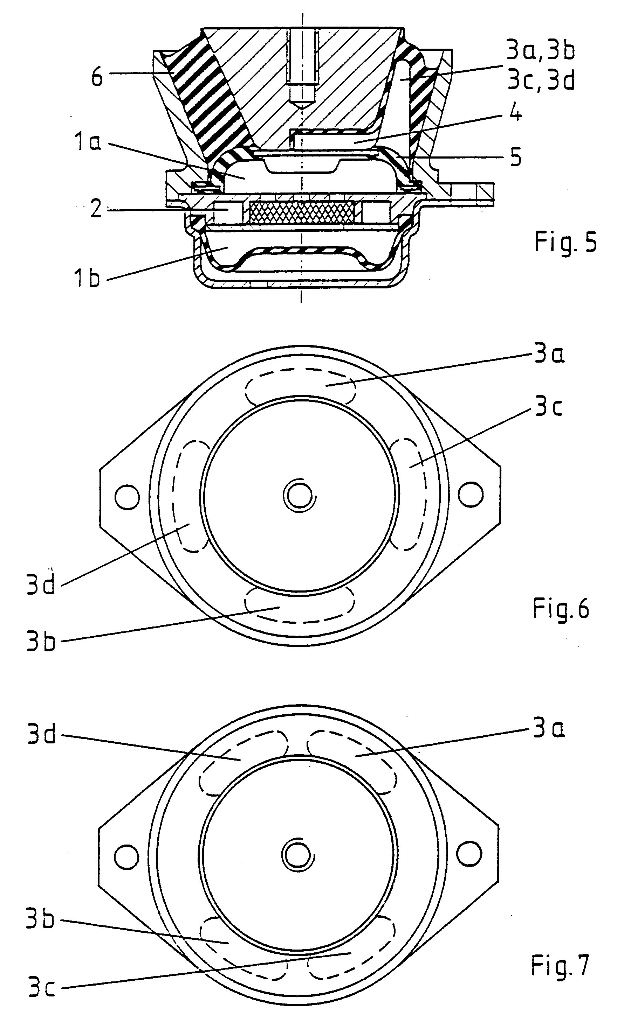

In der Figur 5 und der zugehörigen Draufsicht der Figur 6 bzw. der Figur 7 ist ein Gummilager dargestellt, bei dem in zwei horizontalen Achsen Kammern 3a, 3b, 3c, 3d in der Elastomerfeder 6 eingebracht sind. Durch eine Verbindung zweier Kammern oder aller Kammern über einen Kanal 4 läßt sich eine Dämpfung in einer oder mehreren Querrichtungen erzielen. Die Kammern 3a, 3b, 3c, 3d lassen sich dabei gemäß Fig.6 oder gemäß Fig.7 anordnen, so daß gegebenenfalls in einem bestimmten Bereich eine harte Schub-Druckkennlinie in einer horizontalen Richtung erreicht werden kann.

### Bezugszeichenliste

- 1a: - Kammer
- 1b: - Kammer
- 2: - Kanal
- 3a: - Kammer
- 3b: - Kammer
- 3c: - Kammer
- 3d: - Kammer
- 4: - Kanal
- 5: - Trennteil
- 6: - Elastomerfeder
- 7: - Befestigungsteil
- 8: - Befestigungsteil
- 9: - Anschlag
- 10: - Trennwand
- 11: - Entkopplungsmembran
- 12: - Faltenbalg
- 13: - Schutzkappe
- 14: - Entlüftungsbohrung
- 15: - Öffnung

## Patentansprüche

1. Elastisches Gummilager, insbesondere für Kraftfahrzeuge, mit mindestens zwei Befestigungsteilen (7, 8), die über eine Elastomerfeder (6) miteinander verbunden sind, und mit einer vertikal wirkenden hydraulischen Dämpfungsvorrichtung und mindestens einer in horizontaler Richtung wirkenden hydraulischen Dämpfungsvorrichtung bestehend aus mindestens zwei horizontal gegenüberliegenden, in die Elastomerfeder (6) eingeformten und mit Dämpfungsflüssigkeit gefüllten Kammern (3a, 3b, 3c, 3d), die über mindestens einen als Dämpfungskanal wirkenden Kanal (4) miteinander verbunden sind, wobei unterhalb der horizontal wirkenden Dämpfungsvorrichtung die in Richtung der vertikalen Koordinatenachse (z) ausgerichtete vertikal wirkende Dämpfungsvorrichtung vorgesehen ist, deren Kammern (1a, 1b) in Richtung der vertikalen Koordinatenachse hintereinanderliegend angeordnet und über einen Kanal (2) hydraulisch miteinander verbunden sind,
dadurch gekennzeichnet,
daß die Kammern (3a, 3b, 3c, 3d) der horizontal wirkenden Dämpfungsvorrichtung in die Elastomerfeder (6) nach unten offen eingeformt sind und nach unten durch ein von der Elastomerfeder (6) separates Trennteil (5) begrenzt sind, unterhalb dieses die vertikal wirkende Dämpfungsvorrichtung angeordnet ist.

2. Gummilager nach Anspruch 1,
dadurch gekennzeichnet,
daß das Gummilager in einer horizontalen Koordinatenachse eine weiche Schubkennlinie und in der anderen horizontalen Koordinatenachse eine harte Kennlinie aufweist, und daß die horizontale Dämpfvorrichtung in Richtung der weichen Schubkennlinie angeordnet ist.

3. Gummilager nach Anspruch 1,
dadurch gekennzeichnet,
daß das Gummilager als Rechtecklager ausgebildet ist.

4. Gummilager nach Anspruch 1,
dadurch gekennzeichnet,
daß das Gummilager als Rundlager ausgebildet ist.

5. Gummilager nach Anspruch 1,
dadurch gekennzeichnet,
daß vorzugsweise mehr als die mindestens zwei Kammern (3a, 3b) der horizontal wirkenden Dämpfungsvorrichtung vorgesehen sind und die beiden Kammern (3a, 3b) und/oder die zusätzlichen zwei Kammern (3c, 3d) in der Elastomerfeder (6) diametral gegenüberliegend zu beiden Seiten eines der Befestigungsteile (7) angeordnet sind.

6. Gummilager nach Anspruch 1,
dadurch gekennzeichnet,
daß die Wandungen des Kanales (4) von einem der Befestigungsteile (7 oder 8) und einem Trennteil (5) gebildet werden.

7. Gummilager nach Anspruch 1,
dadurch gekennzeichnet,
daß die mindestens Zwei Kammern (3a, 3b) und weitere zwei Kammern (3c, 3d) der horizontal wirkenden Dämpfungsvorrichtung über jeweils einen Kanal (4) miteinander verbunden sind.

8. Gummilager nach Anspruch 1,
dadurch gekennzeichnet,
daß das Trennteil (5) die Kammern (3a und 3b) der horizontal wirkenden Dämpfungsvorrichtung und die als Arbeitskammer wirkende Kammer (1a) der vertikal wirkenden Dämpfungsvorrichtung gegeneinander trennt.

9. Gummilager nach Anspruch 1,
dadurch gekennzeichnet,
daß das Trennteil (5) der horizontal wirkenden Dämpfungsvorrichtung mit einem Axialanschlag (9) versehen ist.

10. Gummilager nach Anspruch 1,
dadurch gekennzeichnet,
daß eine der beiden Kammern (1b) der vertikal wirkenden Dämpfungsvorrichtung als volumenausgleichender Ausgleichsraum ausgebildet ist.

11. Gummilager nach Anspruch 1,
dadurch gekennzeichnet,
daß mindestens einer der Kanäle (2 oder 4) als ringförmig um die Lagerachse verlaufender Dämpfungskanal ausgebildet ist.

12. Gummilager nach Anspruch 1,
dadurch gekennzeichnet,
daß bei der vertikal wirkenden Dämpfungsvorrichtung der Kanal (2) in einer die Kammern (1a und 1b) trennenden Trennwand (10) angeordnet ist.

13. Gummilager nach Anspruch 1,
dadurch gekennzeichnet,
daß die Trennwand (10) der vertikal wirkenden Dämpfungsvorrichtung mit einer Entkopplungsmembran (11) versehen ist.

14. Gummilager nach Anspruch 1,
dadurch gekennzeichnet,
daß der Kanal (4) der horizontal wirkenden Dämpfungsvorrichtung als Bohrung im Befestigungsteil (7) ausgebildet ist.

15. Gummilager nach Anspruch 1,
dadurch gekennzeichnet,
daß mindestens eine Kammer (1a, 1b, 3a, 3b, 3c, 3d) mit einer Entkopplungsmembran (11) versehen ist.

16. Gummilager nach Anspruch 1,
dadurch gekennzeichnet,
daß parallel zu den Kanälen (2 und 4) der horizontal wirkenden Dämpfungsvorrichtung und der vertikal wirkenden Dämpfungsvorrichtung mindestens ein Bypaßventil zwischen den Kammern (1a, 1b oder 3a, 3b, 3c, 3d) angeordnet ist.

17. Gummilager nach Anspruch 1,
dadurch gekennzeichnet,
daß in dem Trennteil (5) der horizontal wirkenden Dämpfungsvorrichtung eine Öffnung (15) für den Druckausgleich zwischen den Kammern (3a, 3b) und den Kammern (1a, 1b) der vertikal wirkenden Dämpfungsvorrichtung vorgesehen ist.

## Claims

1. Resilient rubber mounting, in particular for motor vehicle, with at least two attachment member (7,8) connected together through an elastomeric spring (6) and with a vertically acting hydraulic damper device and at least one hydraulic damping device acting in a horizontal direction comprising at least two horizontally opposed chambers (3a,3b,3c,3d) formed in the spring (6) and filled with damping fluid and connected together through at least one passage (4) acting as a damping or throttling passage, the vertically acting damping device directed along the vertical co-ordinate axis (z) being provided underneath the horizontally acting damping device and having its chambers (1a,1b) arranged one behind the other in the direction of the vertical co-ordinate axis and being hydraulically connected together through a passage (2),
characterised in that,
the chambers (3a,3b,3c,3d) of the horizontally acting damping device are formed in the elastomeric spring (6) to be downwardly open and are bounded in a downward direction by a dividing member (5) separate from the spring (6), the vertically acting damping device being arranged underneath it.

2. Rubber mounting according to claim 1,
characterised in that,
the rubber mounting has a soft shear characteristic in one horizontal co-ordinate axis and a hard characteristic in the other horizontal co-ordinate axis and that the horizontal damping device is arranged in the direction of the soft characteristic.

3. Rubber mounting according to claim 1,
characterised in that,
the rubber mounting is in the form of a rectangular mounting.

4. Rubber mounting according to claim 1,
characterised in that,
the rubber mounting is in the form of a round mounting.

5. Rubber mounting according to claim 1,
characterised in that,
preferably more than the at least two chambers (3a,3b) are provided in the horizontally acting damping device and the two chambers (3a,3b) and/or the additional two chambers (3c,3d) are arranged in the spring (6) diametrically opposite on both sides of one of the attachment members (7).

6. Rubber mounting according to claim 1,
characterised in that,
the walls of the passage (4) are formed by one of the attachment members (7 or 8) and a dividing member (5).

7. Rubber mounting according to claim 1,
characterised in that,
the at least two chambers (3a,3b) and further two chamber (3c,3d) of the horizontally acting damping device are connected together through a respective passage (4).

8. Rubber mounting according to claim 1,
characterised in that,
the dividing member (5) divides from one another the horizontally acting device and the chamber (1a), acting as the working chamber, of the vertically acting damping device.

9. Rubber mounting according to claim 1,
characterised in that,
the dividing member (5) of the horizontally acting damping device is provided with an axial stop (9).

10. Rubber mounting according to claim 1,
characterised in that,
one of the two chambers (1b) of the vertically acting damping device is in the form of a volume-compensating compensation space.

11. Rubber mounting according to claim 1,
characterised in that,
at least one of the passages (2 or 4) is in the form of a ring-shaped damping passage extending around the axis of the mounting.

12. Rubber mounting according to claim 1,
characterised in that,
in the vertically acting damping device the passage (2) is arranged in a dividing wall (10) that separates the chambers (1a and 1b).

13. Rubber mounting according to claim 1,
characterised in that,
the dividing wall (10) of the vertically acting damping device is provided with a decoupling membrane (11).

14. Rubber mounting according to claim 1,
characterised in that,
the passage (4) of the horizontally acting damping device is in the form of a bore in the attachment member (7).

15. Rubber mounting according to claim 1,
characterised in that,
at least one of the chambers (1a,1b,3a,3b,3c,3d) is provided with a decoupling membrane (11).

16. Rubber mounting according to claim 1,
characterised in that,
at least one bypass valve is arranged between the chambers (1a,1b or 3a,3b,3c,3d) parallel to the passages (2 and 4) of the horizontally acting damping device and the vertically acting damping device.

17. Rubber mounting according to claim 1,
characterised in that,
an opening (15) is provided in the dividing member (5) of the horizontally acting damping device for balancing out the pressure between the chambers (3a,3b) and the chambers (1a,1b) of the vertically acting damping device.

## Revendications

1. Support élastique, en particulier pour véhicules automobiles, comprenant au moins deux pièces de fixation (7, 8), qui sont reliées l'une à l'autre au moyen d'un ressort en élastomère (6), et comprenant un dispositif d'amortissement hydraulique agissant verticalement et au moins un dispositif d'amortissement hydraulique agissant en direction horizontale, composé d'au moins deux chambres (3a, 3b, 3c, 3d) formées dans le ressort en élastomère (6), qui sont opposées l'une à l'autre dans le sens horizontal et sont remplies d'un liquide d'amortissement, lesdites chambres étant reliées l'une à l'autre via au moins un conduit (4) agissant en tant que conduit d'amortissement, le dispositif d'amortissement agissant verticalement et orienté en direction de l'axe de coordonnées vertical (z) étant prévu au-dessous du dispositif d'amortissement agissant horizontalement, les chambres (1a, 1b) du dispositif d'amortissement agissant verticalement étant agencées l'une derrière l'autre en direction de l'axe de coordonnées vertical et étant reliées l'une à l'autre sur le plan hydraulique via un conduit (2), caractérisé en ce que les chambres (3a, 3b, 3c, 3d) du dispositif d'amortissement agissant horizontalement sont formées dans le ressort en élastomère (6) en étant ouvertes vers le bas et sont délimitées vers le bas par une pièce de séparation (5) séparée du ressort en élastomère (6), et en ce que le dispositif d'amortissement agissant verticalement est agencé au-dessous de cette pièce de séparation (5).

2. Support élastique selon la revendication 1, caractérisé en ce que le support élastique présente dans la direction de l'axe de coordonnées horizontal une ligne caractéristique "molle" et dans l'autre axe de coordonnées horizontal une ligne caractéristique "raide", et en ce que le dispositif d'amortissement horizontal est agencé dans la direction de la ligne caractéristique "molle".

3. Support élastique selon la revendication 1, caractérisé en ce qu'il est réalisé sous la forme d'un support rectangulaire.

4. Support élastique selon la revendication 1, caractérisé en ce qu'il est réalisé sous la forme d'un support circulaire.

5. Support élastique selon la revendication 1, caractérisé en ce qu'il est prévu de préférence un nombre de chambres supérieur auxdites au moins deux chambres (3a, 3b) du dispositif d'amortissement agissant horizontalement, et en ce que les deux chambres (3a, 3b) et/ou les deux chambres additionnelles (3c, 3d) sont agencées en opposition diamétrale dans le ressort en élastomère (6) des deux côtés de l'une des pièces de fixation (7).

6. Support élastique selon la revendication 1, caractérisé en ce que les parois du conduit (4) sont formées soit par l'une des pièces de fixation (7 ou 8) soit par une pièce de séparation (5).

7. Support élastique selon la revendication 1, caractérisé en ce que les au moins deux chambres (3a, 3b) et les deux autres chambres (3c, 3d) du dispositif d'amortissement agissant horizontalement sont reliées l'une à l'autre via un conduit respectif (4).

8. Support élastique selon la revendication 1, caractérisé en ce que la pièce de séparation (5) sépare l'une de l'autre les chambres (3a et 3b) du dispositif d'amortissement agissant horizontalement, et la chambre (1a) faisant office de chambre de travail du dispositif d'amortissement agissant verticalement.

9. Support élastique selon la revendication 1, caractérisé en ce que la pièce de séparation (5) du dispositif d'amortissement agissant horizontalement est pourvue d'une butée axiale (9).

10. Support élastique selon la revendication 1, caractérisé en ce que l'une des deux chambres (1b) du dispositif d'amortissement agissant horizontalement est réalisée sous la forme d'une chambre de compensation de volume.

11. Support élastique selon la revendication 1, caractérisé en ce que l'un au moins des conduits (2 ou 4) est réalisé en tant que conduit d'amortissement de forme annulaire qui s'étend autour de l'axe du support.

12. Support élastique selon la revendication 1, caractérisé en ce que dans le dispositif d'amortissement agissant verticalement, le conduit (2) est agencé dans une paroi de séparation (10) qui sépare les chambres (1a et 1b).

13. Support élastique selon la revendication 1, caractérisé en ce que la paroi de séparation (10) du dispositif d'amortissement agissant verticalement est pourvue d'une membrane de découplage (11).

14. Support élastique selon la revendication 1, caractérisé en ce que le conduit (4) du dispositif d'amortissement agissant horizontalement est réalisé sous la forme d'un perçage dans la pièce de fixation (7).

15. Support élastique selon la revendication 1, caractérisé en ce qu'au moins une chambre (1a, 1b, 3a, 3b, 3c, 3d) est pourvue d'une membrane de découplage (11).

16. Support élastique selon la revendication 1, caractérisé en ce qu'il est prévu au moins une soupape de dérivation entre les chambres (1a, 1b ou 3a, 3b, 3c, 3d), agencée en parallèle aux conduits (2 et 4) du dispositif d'amortissement agissant horizontalement et du dispositif d'amortissement agissant verticalement.

17. Support élastique selon la revendication 1, caractérisé en ce que dans la pièce de séparation (5) du dispositif d'amortissement agissant horizontalement, il est prévu une ouverture (15) pour la compensation de pression entre les chambres (3a, 3b) et les chambres (1a, 1b) du dispositif d'amortissement agissant verticalement.
